Europäisches Patentamt

European Patent Office

Office européen des brevets

(11) Publication number: **0 224 388**
**A2**

## (12) EUROPEAN PATENT APPLICATION

(21) Application number: **86309136.9**

(22) Date of filing: **21.11.86**

(51) Int. Cl.⁴: **G 09 G 3/36**
**G 02 F 1/133**

(30) Priority: **22.11.85 JP 264349/85**

(43) Date of publication of application:
**03.06.87 Bulletin 87/23**

(84) Designated Contracting States: **DE FR GB**

(71) Applicant: **NEC CORPORATION**
**33-1, Shiba 5-chome, Minato-ku**
**Tokyo 108 (JP)**

(72) Inventor: **Noguchi, Kesao c/o NEC Corporation**
**33-1, Shiba 5-chome Minato-ku**
**Tokyo (JP)**

(74) Representative: **Pritchard, Colin Hubert et al**
**Mathys & Squire 10 Fleet Street**
**London EC4Y 1AY (GB)**

(54) Active matrix liquid crystal display device.

(57) An active matrix liquid crystal display device comprises a matrix substrate, a counter substrate, and a liquid crystal material. The matrix substrate is disposed in face-to-facr relationship with the counter substrate, and the liquid crystal material is filled into the space between the counter substrate and the matrix substrate, in which display electrodes, thin-film transistors. scanning lines and signal lines are respectively disposed on the matrix substrate in a matrix-like manner. A counter electrode disposed on the counter substrate is divided into a plurality of stripes by n/x (n = the number of scanning lines) in the scanning direction with respect to the number of scanning lines n formed on the matrix substrate (x = 1, 2, 3, ... , n/2, and such a number that can divide n into an integer).

FIG.1 (PRIOR ART)

## Description

### ACTIVE MATRIX LIQUID CRYSTAL DISPLAY DEVICE

The present invention relates to a liquid crystal display device and more particularly to an active matrix liquid crystal display device in which thin-film transistors are respectively formed as switching elements at the cross points of scanning lines and signal lines.

Much effort has been devoted to develop active matrix liquid crystal display devices which have possibilities of displaying a large amount of information and having improved display characteristics such as contrast ratios, angles of visibility, and the number of gradations. Such active matrix liquid crystal display devices may be applied to office automation systems and thin-sized television sets.

As is well known, thin-film transistors are used as active elements in an active matrix liquid crystal display device. In particular, amorphous-silicon or polycrystalline-silicon thin-film transistors are regarded as being very promising. Examples of use of amorphous silicon thin-film transistors have previously been reported in the IEEE INTERNATIONAL CONFERENCE ON CONSUMER ELECTRONICS Record, 1984, pages 74 and 75 and in the Proceedings of the SID, 1984, Vol. 25/1, pages 11 to 16.

These prior-art active matrix liquid crystal display devices are respectively provided with a pair of electrode substrates and a liquid crystal material sandwiched therebetween. One of the pair of electrode substrates has a single electrode formed over the whole of the substrate as a common electrode, while the other has a plurality of display electrodes equivalent in number to the total number of picture elements, such display electrodes being arranged in a matrix-like manner. Transistors equivalent in number to the total number of picture elements are respectively disposed in side-by-side relationship with the display electrodes in order to select the display electrodes.

In such a conventional type of active matrix liquid crystal device, a counter electrode is formed as a single common electrode as mentioned above. In order to apply an alternating electric field to the liquid crystal material, there has been a disadvantage in that a driving voltage needs to be at a level equivalent to double the effective voltage applied to the liquid crystal material, because a voltage at a level equivalent to half the signal voltage is applied to the common electrode. Therefore, when the optimum contrast ratio, angle of visibility, and number of gradations are to be achieved, the driving voltage must be enhanced, thus leading to the drawback of requiring a high-voltage supply source. It is true that the prior-art device has the advantage that its power consumption is low since the required amount of electric current is small even if the level of voltage used is high; however, the use of a high-voltage supply source places various limitations on the use of driver ICs and the kinds of batteries incorporated therein, leading to defects in the entire system.

The necessity to provide another negative voltage supply source is a further disadvantage with this system. Specifically, the overall weight is increased by an amount equivalent to the weight of this additional supply source, and the display device becomes not suitable for use in systems of the hand-held type.

No prior art has previously proposed a structure for an active matrix liquid crystal display device which is capable of solving the above-described problems.

It is therefore an object of the present invention to provide an active matrix liquid crystal display device in which the effective voltage applied to a liquid crystal material can be enhanced while at the same time allowing the driving voltage to be reduced.

An active matrix liquid crystal display device according to the present invention is featured by dividing the counter electrode into a plurality of electrodes running in a direction of scanning lines and in parallel with each other. The number of the divided counter electrodes may be 2 or more and not more than the number of the scanning lines, thus the display device of the invention comprises a matrix substrate, a counter substrate disposed in face-to-face relationship with the matrix substrate, a liquid crystal material filld into a space between the counter substrate and the matrix substrate, display electrodes on the matrix substrate, thin-film transistors on the matrix substrate, scanning lines and signal lines disposed on the matrix substrate in a matrix-like manner, and a plurality of counter electrodes disposed on the counter substrate, the number of the counter electrodes being $n/x$ ($n$ is the number of the scanning lines and $x$ is 1, 2, 3, ..., $n/2$ or such a number that can divide $n$ into an integer).

The above and other objects, features and advantages of the present invention will become apparent from the following description of the preferred embodiments thereof, taken in conjunction with the accompanying drawings.

Fig. 1 is a diagrammatic illustration of the structure of an active matrix liquid crystal display device of the prior art;

Fig. 2 is a timing chart of the signals applied to the prior-art active matrix liquid crystal display device;

Fig. 3 is a timing chart similar to Fig. 2, but showing a novel method of application of the signals to the display device;

Fig. 4 is a diagrammatic illustration showing a preferred embodiment of an active matrix liquid crystal display device in accordance with the present invention;

Fig. 5 is a timing chart showing the signals applied to the preferred embodiment of the active matrix liquid crystal display device in accordance with the present invention;

Fig. 6A is an enlarged top plan view diagrammatically showing a portion of the active matrix liquid crystal display device of the present invention; and

Fig. 6B is a partially cross-sectional view taken along the line A - A of Fig. 6A, these two Figures being respectively diagrammatic illustrations showing a bonding step which forms part of a process for producing the active matrix liquid crystal display device of the present invention.

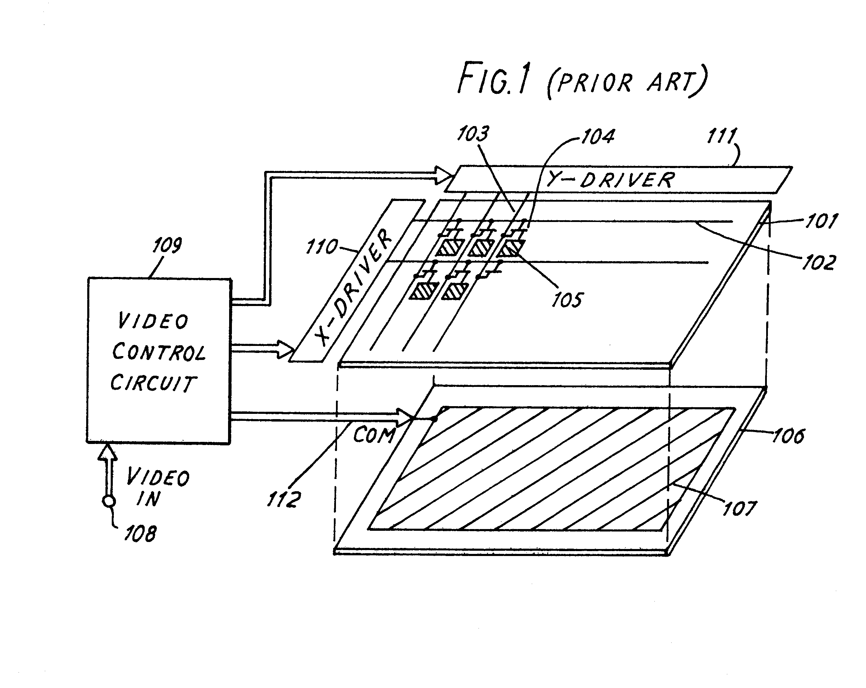

Fig. 1 show, in perspective, the diagrammatic construction of a typical prior-art active matrix liquid crystal display device. Bus lines constituting scanning lines 102 and signal lines 103 are formed in a matrix-like manner on a matrix substrate 101 made of glass or other electrically insulated materials. A thin-film transistor (TFT) 104 is formed in the vicinity of each of the cross points defined by the lines 102 and 103 on the matrix substrate 101. The transistors 104 are electrically connected to the scanning lines 102 and the signal lines 103 as well as display electrodes 105 which are formed on the matrix substrate 101. A counter substrate 106 is disposed in face-to-face relationship with the matrix substrate 101, and is provided with a single counter electrode 107 on the side facing the substrate 101. The space between the substrates 101 and 106 is filled with a liquid crystal material, these substrates being bonded together with a sealing compound. The counter electrode 107 is formed over the entire region of the counter substrate 106, such region being greater than the area of a display screen.

When a visual display is to be produced, a video signal is input through an input terminal 108 to a video control circuit 109. In response to this signal input, the video control circuit 109 generates a scanning signal determined by the frame cycle, the number of scanning lines formed on the display device and the scanning method employed. In addition, the video control circuit 109 generates a video sampling signal in accordance with the display capacity of the display device, and also provides a voltage applied to the counter electrode 107 for applying an electric field to the liquid crystal material. When a visual color display is to be produced, the video control circuit 109 generates a sampling signal which is a color signal obtained by means of a color separation circuit. In order to drive the scanning lines on the display device, the thus-obtained scanning signal is processed by an X-axis driver 110 provided with shift registers, and is applied to the gate of the respective TFTs connected to the scanning lines 102 of the display device. When a visual display is to be produced by linear sequential scanning, the video sampling signal is processed in a Y-axis driver 111 including sample-and-hold circuitry as well as shift registers which driver is capable of holding at one time signals corresponding to the line, and is applied to the drain (or the source) of the respective TFTs connected to the signal lines 103 of the display device. Since the voltage applied to the counter electrode 107 acts upon all the display electrodes 105 in common, this voltage is also called a common counter voltage ($V_{com}$) 112. In this fashion, the scanning lines 102, the signal lines 103 and the common counter electrode 112 which are formed on the active matrix display device are respectively supplied with voltage in accordance with a pattern to be displayed, so that it is possible to display a given picture element or elements in the matrix circuit.

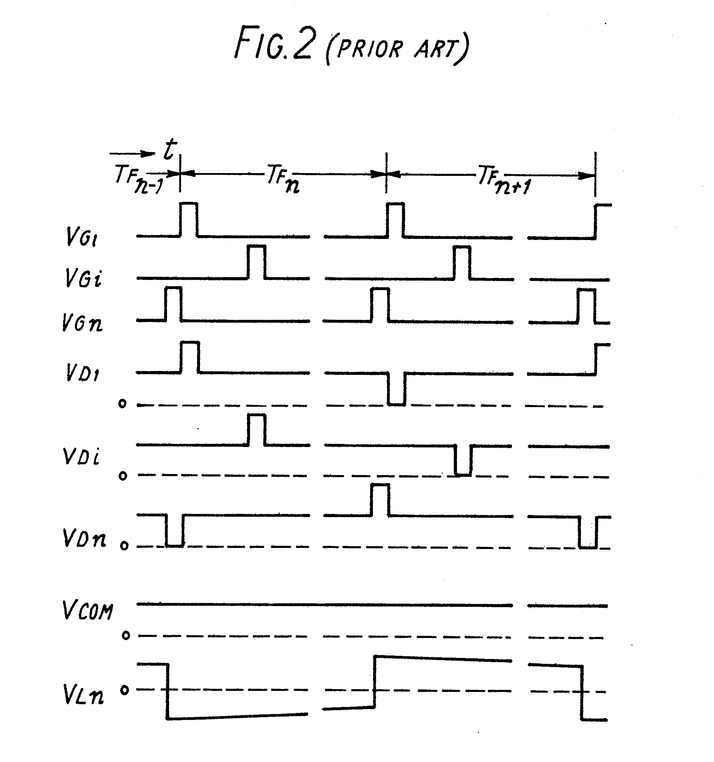

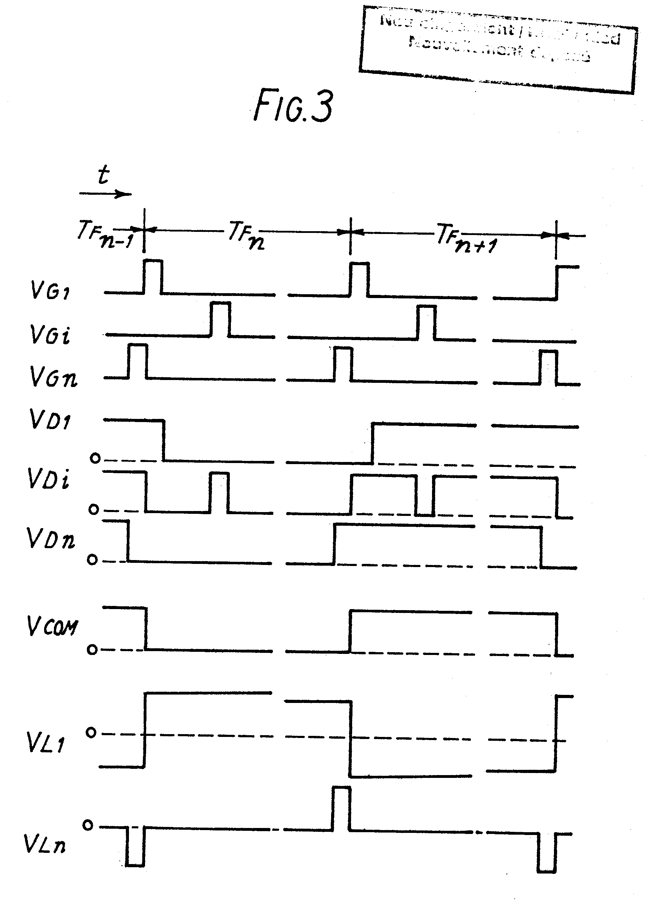

The voltage applied to produce a visual display will be described in detail below with reference to the signal timing charts shown in Figs. 2 and 3. The following description refers to an example in which amorphous silicon TFTs are used.

Referring to Figs. 2 and 3, gate voltages $V_{GI}$, $V_{GI}$, ..., and $V_{Gn}$ respectively range from about 10 to 20 V, each having a pulse width corresponding to n (= the number of scanning lines). During a given field period $T_{Fn}$ when one screen is canned, they are respectively applied to first, $i_{th}$, ..., and $n_{th}$ scanning lines in the above-noted order.

Signals $V_{DI}$, $V_{DI}$ and $V_{Dn}$ are applied to a certain signal line during the field period $T_{Fn}$. In synchronism with the timing at which the scanning lines are scanned, a drain (or a source) voltage of a maximum of 15 to 20 V is applied to a display point at which a visual display is effected. For example, a first display point responds to the signal $V_{DI}$, an $i_{th}$ display point responds to the signal $V_{DI}$ and an $n_{th}$ display point responds to the signal $V_{Dn}$. When an image is to be displayed with gradation, the level of the above-mentioned applied voltage is changed within the range of 10 to 20 V. However, while a field-effect type of liquid crystal material is being used, if this material is exposed to a unidirectional electric field for several years, the characteristics of the liquid crystal material might begin to deteriorate. Therefore, an alternating field is applied to the liquid crystal material in view of its limited lifetime. For this reason, the counter electrode 107 is supplied with the voltage at a level equivalent to half the peak value of the drain (or source) voltage as the aforementioned common counter voltage $V_{COM}$, and the reference level of the drain (or source) voltage is made the same as the level of the common counter voltage $V_{COM}$. During the field period $T_{Fn+1}$ following the field period $T_{Fn}$, the signals $V_{DI}$, $V_{DI}$ and $V_{Dn}$ are respectively set at zero at the timing corresponding to the points to be displayed. In consequence, a visual display is produced in such a manner that the electric field applied to the liquid crystal display is reversed in each field period. At display points where no visual display is produced, the common counter voltage $V_{COM}$ at the counter electrode 107 agrees with the signal voltage at the corresponding display electrodes (or their drain or source voltage), so that no electric field is applied to the liquid crystal.

A voltage $V_{Ln}$ applied to the liquid crystal will next be described with reference to Fig. 2. The applied liquid crystal voltage $V_{Ln}$ is the voltage generated between a certain display electrode and the counter electrode, with a liquid crystal material having an electrostatic capacity being interposed therebetween. This display electrode, for example, is assumed to be formed at the cross point defined by an $n_{th}$ scanning line and a given signal line. The applied liquid crystal voltage $V_{Ln}$ is accumulated by an amount equivalent to an absolute value $|V_{Dn} - V_{COM}|$ by the switching of an associated TFT. After the TFT has been turned off, the voltage $V_{Ln}$ is discharged and attenuated in accordance with the CR time constant based on the liquid crystal.

However, the OFF-resistance of the TFT is as high as $10^{11}$ $\Omega$ and the liquid crystal per se exhibits a high resistance similar to the OFF-resistance. Accordingly, the time constant is so selected as to limit the level of attenuation not to exceed forty percent.

As described above, a typical prior-art active matrix liquid crystal display device is so arranged that a voltage at a level equivalent to half the signal voltage is applied to the common electrode in order to apply an alternating field to the liquid crystal. Accordingly, the prior art device is disadvantageous in that the driving voltage requires two times the level of the effective voltage.

In another method, the alternating voltage is applied to the common electrode as well. However, this method involves disadvantage in that, when positive and negative alternating voltages are applied, another negative supply source is needed, similar to the case where positive and negative alternating voltages are used as signal voltage. In yet another method, no negative supply source is used but the drain (or source) voltages $V_{DI}$, $V_{DI}$ and $V_{Dn}$, which act as signal voltage as shown in Fig. 3, are respectively restored to a positive alternating voltage every other field period, and a voltage reverse to the signal voltage is applied to a display point when a visual display is to be turned on. Simultaneously, the positive alternating voltage is applied to the common counter voltage $V_{COM}$ in the direction reverse to that of the signal voltage every other field period, so that it is possible to enhance the effective voltage applied to the liquid crystal while the driving voltage is reduced. However, this method also involves the following disadvantage. Although an applied liquid crystal voltage $V_{LI}$ is provided at the first scanning line ideally as described above, factors such as the $R_{OFF}$ resistance of the TFT, the resistance and the capacity of the liquid crystal and the storage capacity separately added to the device produce little effect on the applied liquid crystal voltage $V_{Ln}$ developed in the $n_{th}$ scanning line. Specifically, since the potential on the counter electrode is reversed immediately after an $n_{th}$ scanning has been performed. The applied liquid crystal voltage $V_{Ln}$ as shown in Fig. 3 is reduced in width and the effective voltage is made small, and this makes it impossible to turn on the liquid crystal.

Accordingly, in the prior-art active matrix liquid crystal display device having a single common electrode as a counter electrode, there is an inevitable problem relating to the structural limitations of a driving voltage which cannot be solved merely by altering the driving method.

The above-described conventional type of active matrix liquid crystal display device requires a high driving voltage in order to obtain the optimal contrast ratio, angle of visibility and number of gradations, leading to the disadvantage that an electric supply source capable of generating a high voltage is needed.

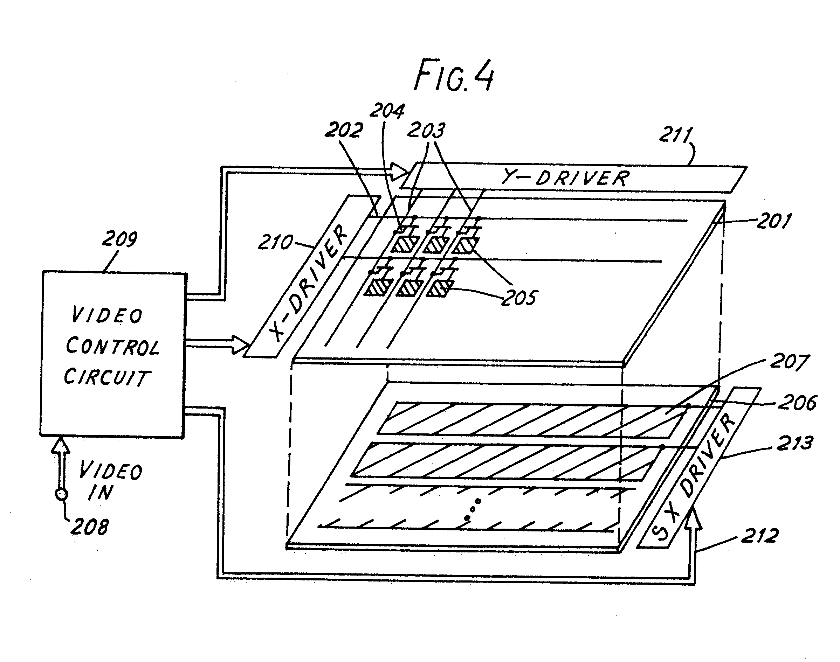

A preferred embodiment of the present invention will be described with reference to Figs. 4 to 6.

Referring to Fig. 4, a plurality of scanning lines 202 and a plurality of signal lines 203 are formed on a matrix substrate 201 in the same manner as the prior art. A thin-film transistor (TFT) 204 is disposed in the vicinity of each of the cross points defined by the lines 202 and 203, connected to a corresponding display electrode 205 on the matrix circuitry. A counter substrate 206 is disposed in face-to-face relationship with the matrix substrate 201, and a plurality of divided counter electrodes 207 are formed on the counter substrate 206. The space between the substrates 201 and 206 is filled with a liquid crystal material (not shown) and these substrates are bonded by a sealing compound (not shown).

The number of the scanning lines formed on the matrix substrate 201 is, for example, four hundred (400), and the number of the divided counter electrodes 207 in this example is also four hundred (400). Each of the divided counter electrodes 207 is longer than the opposite display screen. The respective lead terminals for the divided counter electrodes 207 may be disposed not on the counter substrate 206 but on a side opposite to the lead terminal of the respective scanning lines of the matrix substrate 201 via the transfer electrode. Moreover, a color filter (not shown) could be disposed above or below the counter electrode in order to produce a visual color display.

To obtain a visual display, a video signal is input through an input terminal 208 to a video control circuit 209, and a scanning signal and video sampling signal applied to the signal lines 203 are produced by the video control circuit 209 in the same manner as the prior art. The signal is processed in corresponding Y-axis driver 211 or X-axis driver 210, and is applied to TFTs within the matrix circuit in the form of the gate voltage and the drain (or source) voltage. This process is also the same as that of the prior art. However, the common counter voltage which has been applied in the prior art to all the picture elements at a constant level is not used in the embodiment. A counter electrode signal 212 is triggered by a trigger signal in synchronism with the scanning cycle of the scanning lines 202 on the matrix substrate 201. A counter electrode driver 213 includes shift registers for processing a signal in response to such a trigger signal, and voltage is sequentially applied to the divided counter electrodes 207 through the counter electrode driver 213. Therefore, the timing of scanning the divided counter electrodes 207 is synchronized with that of scanning the display electrodes 205 on the matrix substrate 201. In consequence, in the same manner as the prior art, a desired cross point within the liquid crystal display is selected by a desired scanning line 202 and a corresponding signal line 203, so that an image can be displayed at the cross point on the display electrode 205.

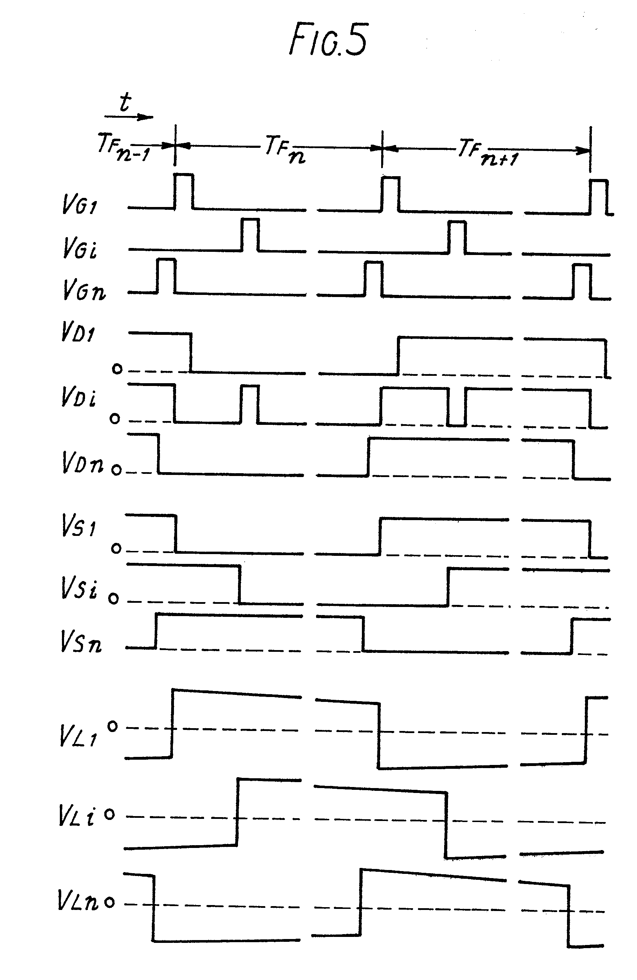

The active matrix liquid crystal display device which embodies the present invention is operated in response to the signals shown in Fig. 5. The drain (or the source) voltage applied to each of the signal lines 203 alternates in each field period and the voltage applied to each of the divided counter electrodes 207 alternates in each field period each time one scanning operation is performed. Thus, the voltage $V_{LI}$ applied to the first scanning line, the

7     **0 224 388**     8

voltage $V_{Li}$ applied to the $i_{th}$ scanning line and the voltage $V_{Ln}$ applied to the last $n_{th}$ scanning line can provide the same level of the effective voltage for each liquid crystal display cell.

Therefore, it is possible to double the effective voltage applied to the liquid crystal as compared with the prior art, and this allows the driving voltage to be reduced by an amount equivalent to such doubled level. Thus, the drain voltage can be reduced from a conventional level of 10 to 20 V to as low as 5 to 12 V, thereby enabling the device to be operated by means of an ordinary type of dry battery. Since the level of the drain voltage depends on the drain voltage as well as the gate voltage, the gate voltage can be reduced in accordance with the increased effective value of the drain voltage. In addition, since the voltage applied to the ICs used in the driver circuitry can be reduced, it is remarkably easy to design a 12 V signal processing IC as compared with a prior-art IC for processing a signal at a maximum of 20 V. Since the potential on the divided counter electrodes 207 alternates in each field period, such alternation can be operated at low frequencies.

Although the number of the divided counter electrodes 207 is the same as the number of the scanning lines 202 on the matrix substrate 201 in this illustrated embodiment, the former number could be reduced to half the latter number, that is, it is possible freely to change the number of electrodes divided, depending upon the time constant of the liquid crystal when it is turned off, the scanning period, and the number of scanning lines.

In the presently preferred embodiment, since the counter electrode disposed on the counter substrate is divided by the number capable of dividing the number of the scanning lines of the matrix substrate, the display electrodes and the counter electrodes can be driven by alternating voltages reverse to each other and the applied liquid crystal voltage can be maintained at the level determined by the CR time constant even if the first scanning line is scanned after completion of the scanning of the last $n_{th}$ scanning line. In consequence, the effect of the applied liquid crystal voltage is enhanced two times that of the prior art.

Therefore, in a system incorporating the active matrix liquid crystal display device of this invention, a low voltage supply source can be used and the system can be operated by an ordinary type of dry battery, thereby enabling a hand-held system. The driver circuitry for producing a visual display can also be driven at a low voltage, and this makes it remarkably easy to design the IC incorporated in the driver circuitry. Needless to say, color filter could be disposed above or below the counter electrodes in order to produce color display.

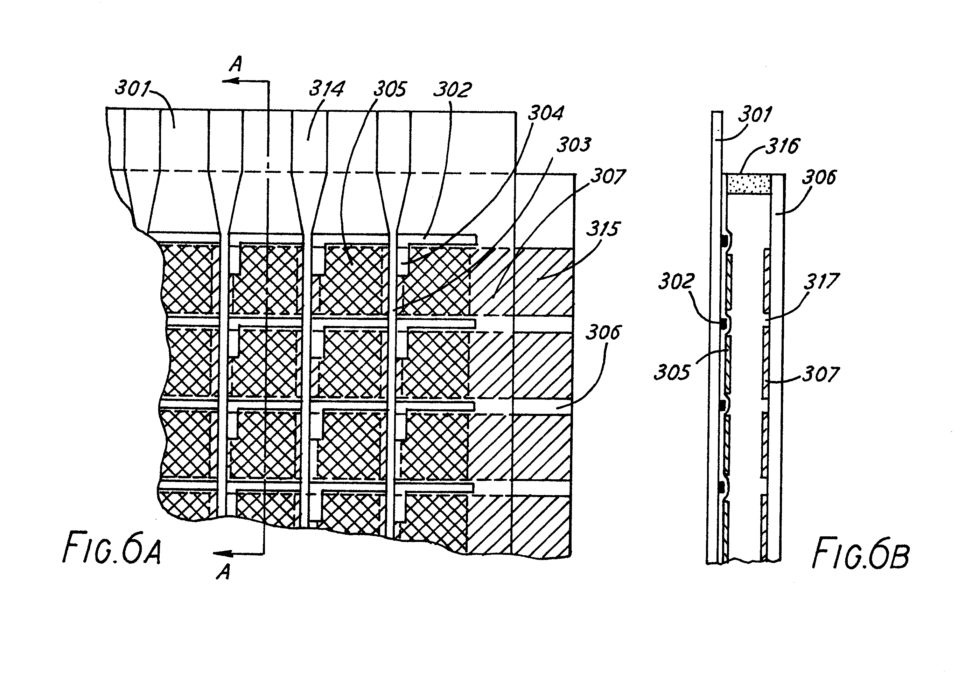

Fig. 6A is an enlarged top plan view diagrammatically showing a portion of the active matrix liquid crystal display device of the present invention; and Fig. 6B is a cross-sectional view taken along the line A - A of Fig. 6A, these two Figures respectively being diagrammatic illustrations showing a bonding step forming part of a process for producing the active matrix liquid crystal display device of the present invention.

Referring to Fig. 6, an matrix substrate 301 has scanning lines 302, signal lines 303, TFTs 304 and display electrodes 305. A counter substrate 306 is disposed in face-to-face relationship with the matrix substrate 301, and a plurality of divided counter electrodes 307 are formed on the substrate 306. Scanning-line terminals (not shown), signal-line terminals 314 and counter-electrode terminals 315 overlap each other in a partially exposed manner. In this state, when the device is held up to the light, each of the scanning lines look like a black line since it is made of a metal wire which does not transmit light. While the scanning lines are being used as alignment reference, counter-electrode gaps 317 are made to agree with the scanning lines which look like black lines by shifting the substrate either 301 or 306. In a state wherein the substrates 301 and 306 correspond to each other, these two substrates are bonded together by using a sealing compound 316 which is previously applied to the substrates either 301 or 306. Incidentally, the production process for the active matrix liquid crystal display device of this invention differs from the prior-art production process in the following respect. The presently preferred embodiment requires a step of dividing the counter electrode which should be formed on the counter substrate 306 into a plurality of divided electrodes, prior to the above-described bonding step. However, after an electrically conductive thin film has been formed as the counter electrode, this film is patterned by a known photoprocess. The other production steps are the same as those of the prior art. The respective lead terminals 315 for the divided counter electrodes 307 may be disposed not on the counter substrate 306 but on a side opposite to the lead terminal of the respective scanning lines 302 or the matrix substrate 301 via the transfer electrode.

As described above, since the alignment between the scanning lines and the divided counter electrodes can be easily carried out and no misregistration occurs in the production process which embodies the present invention, the voltage applied to the liquid crystal has no phase-shift. In addition, since this production process merely requires a relatively easy alignment, the total cost is slightly increased as compared with the prior art substrate bonding process.

As will be readily understood by those skilled in the art from the foregoing, the active matrix liquid crystal display device of this invention possesses advantage in that, since the driving voltage can be reduced, it is easy for the device to be actuated by an ordinary type of dry battery, and in that the sufficiently effective value for the applied liquid crystal voltage can be obtained even at the voltage provided by the dry battery, thereby improving the display characteristics. In addition, since ICs for the driver circuits attached to the display device can be driven at a low voltage, it is easy to design the device including the ICs. Moreover, the present invention can be applied to various hand-held systems owing to the fact that a low voltage supply source can be used as compared with the prior art and no dual

5

electric power supply system is needed.

In addition, in the production process for embodying the present invention, the step of assembling the display device is simple and thus the total cost is not increased. Since no misregistration occurs between the scanning lines and the divided counter electrodes, the display device thus produced enables an exact visual display with good display characteristics.

## Claims

1. An active matrix liquid crystal display device comprising: a matrix substrate having display electrodes, thin-film transistors, scanning lines and signal lines respectively disposed on said matrix substrate in a matrix-like manner; a counter substrate disposed in face-to-face relationship with said matrix substrate and having a plurality of counter electrodes disposed thereon, said counter electrodes being extended in parallel with each other and in the direction parallel to said scanning lines and a number of said counter electrodes being $n/x$ wherein n represents a number of said scanning lines and x is such a number that can divide n into an integer and is not more than $n/2$; and a liquid crystal material being filled into the space between said counter substrate and said matrix substrate.

2. An active matrix liquid crystal display device as claimed in Claim 1, wherein said counter electrodes are scanned in synchronism with scanning of said display electrodes.

3. An active matrix liquid crystal display device as claimed in Claim 1, wherein the number of said counter electrodes is equal to the number of said scanning lines.

4. An active matrix liquid crystal display devices as claimed in Claim 3, wherein the drain (or the source) voltage applied to each of said signal lines alternates in each field period and the voltage applied to each of said counter electrodes alternates in each said field period and thereby maintaining the effective voltage applied to respective portions of said liquid crystal material between said display electrodes and said counter electrodes at the same level.

0224388

FIG.1 (PRIOR ART)

0224388

# FIG. 2 (PRIOR ART)

0224388

## FIG.3

# FIG.4

VIDEO CONTROL CIRCUIT

209

VIDEO IN

208

210 X-DRIVER

202 204 203

205

211 Y-DRIVER

201

207

206

213 SX DRIVER

212

## Fig.5

FIG.6A

FIG.6B